**Europäisches Patentamt**

**European Patent Office**

**Office européen des brevets**

(19)

(11) Veröffentlichungsnummer: **0 026 731**
**B1**

(12)

# EUROPÄISCHE PATENTSCHRIFT

(45) Veröffentlichungstag der Patentschrift:
**29.06.83**

(51) Int. Cl.³: **H 02 H 3/08, H 02 H 7/085**

(21) Anmeldenummer: **80730061.1**

(22) Anmeldetag: **27.08.80**

(54) **Überlast-Schutzanordnung für eine elektrische Maschine.**

(30) Priorität: **28.09.79 DE 2939938**

(43) Veröffentlichungstag der Anmeldung:
**08.04.81 Patentblatt 81/14**

(45) Bekanntmachung des Hinweises auf die Patenterteilung:
**29.06.83 Patentblatt 83/26**

(84) Benannte Vertragsstaaten:
**AT CH LI SE**

(56) Entgegenhaltungen:
**DE-A-2 542 337**
**DE-A-2 653 574**
**DE-B-1 170 518**
**DE-B-2 611 178**

**„Siemens-Zeitschrift", Bd. 50, Nr. 8, 1976, Erlangen, W. Amey et al. „Erweiterter elektronischer Überlastschutz 7SK2 für grosse Drehstrommotoren", S. 554 bis 557.**

(73) Patentinhaber: **SIEMENS AKTIENGESELLSCHAFT, Berlin und München Wittelsbacherplatz 2, D-8000 München 2 (DE)**

(72) Erfinder: **Knütter, Eitel-Fritz, Dipl.-Ing., Kronprinzenstrasse 49, D-1000 Berlin 20 (DE)**

## Überlastschutzanordnung für eine elektrische Maschine

Überlastschutzanordnungen für elektrische Maschinen werden häufig in zwei Gruppen unterteilt, nämlich in Überlastschutzanordnungen mit teilweiser und mit voller Gedächtnisfunktion.

Überlastschutzanordnungen mit teilweiser Gedächtnisfunktion bilden eine vom Strom der elektrischen Maschine abhängige Messgrösse, die ein Mass für die thermische Beanspruchung der Maschine darstellt. Diese Messgrösse entspricht $I^2 \cdot t$, wobei I den Strom der Maschine und t die Zeit bezeichnet. Wird ein vorgegebener Grenzwert der vom Strom der elektrischen Maschine abhängigen Messgrösse überschritten, dann wird die Maschine abgeschaltet. Da jeder Strom I bei ausreichend langer Integrationszeit t zu einer Abschaltung der Maschine führen würde, darf mit der Bildung der vom Strom der Maschine abhängigen Messgrösse $I^2 \cdot t$ erst dann begonnen werden, wenn der Strom der elektrischen Maschine einen den Nennstrom überschreitenden Wert angenommen hat. Eine solche Überlastschutzanordnung mit teilweiser Gedächtnisfunktion benötigt daher ein Startsignal; sie berücksichtigt die Vorbelastung der elektrischen Maschine nicht. Um eine Überlastschutzanordnung mit teilweiser Gedächtsnisfunktion handelt es sich z.B. bei dem Siemens-Überlastschutz 7 TG 3 (Siemens-Druckschrift „Abhängiger Überstromzeitschutz 7 TG 3", Bestell-Nr. E 141/145-000).

Überlastschutzanordnungen mit voller Gedächtnisfunktion benötigen kein Startsignal. Sie arbeiten immer, also auch bei kleinen, unter dem Nennstrom liegenden Strömen und erfassen somit auch die Vorbelastung. Derartige Schutzanordnungen werden in konventioneller Technik hergestellt und vertrieben (z.B. Siemens-Überlastschutz 7 SJ 91. Siemens-Katalog B2, 1978 „Konventionelle Schutzeinrichtungen und Relais", S. 518; 5/11) oder in statischer Ausführung geliefert (Siemens-Überlastschutz 7 SK 2; „Siemens-Zeitschrift" 50 (1976), Heft 8, S. 551-554).

Überlastschutzanordnungen mit voller Gedächtnisfunktion in konventioneller Technik sind zwar in ihrem Aufbau verhältnismässig einfach, aber nur mit Schwierigkeiten an die unterschiedlichen thermischen Zeitkonstanten der zu schützenden Maschinen anpassbar. Überlastschutzanordnungen derselben Art in elektronischer Ausführung dagegen sind gut an die Zeitkonstanten anzupassen, erfordern jedoch einen hohen schaltungstechnischen Aufwand.

Der Erfindung liegt daher die Aufgabe zugrunde, eine Überlastschutzanordnung für eine elektrische Maschine vorzuschlagen, die die Vorteile einer Überlastschutzanordnung mit teilweiser Gedächtnisfunktion und die mit voller Gedächtnisfunktion in sich vereinigt, also sich einerseits durch einen einfachen Schaltungsaufbau und eine definierte Ansprechschwelle und andererseits durch die Möglichkeit der Erfassung der Vorbelastung auszeichnet.

Zur Lösung dieser Aufgabe geht die Erfindung von einer Überlastschutzanordnung für eine elektrische Maschine mit einer Schaltungsanordnung zur Gewinnung einer vom Strom der elektrischen Maschine abhängigen Messgrösse, mit einem der Schaltungsanordnung nachgeordneten nichtlinearen Netzwerk und einem an die Schaltungsanordnung angeschlossenen Grenzwertgeber, mit einer Messeinrichtung mit einem ein RC-Ladeglied enthaltenden Messteil, der dem nichtlinearen Netzwerk und dem Grenzwertgeber nachgeordnet ist, und mit einer Auswerteanordnung aus, die an Ausgänge der Messeinrichtung und des Grenzwertgebers angeschlossen ist.

Erfindungsgemäss ist an die Schaltungsanordnung ein weiteres nichtlineares Netzwerk angeschlossen, und die Messeinrichtung enthält einen weiteren Messteil mit einem weiteren RC-Ladeglied; der weitere Messteil ist eingangsseitig mit dem weiteren nichtlinearen Netzwerk und dem Grenzwertgeber und ausgangsseitig mit dem einen RC-Ladeglied derart verbunden, dass die Spannung am Kondensator des weiteren RC-Ladegliedes auf den Kondensator des einen RC-Ladegliedes übertragen wird.

Ein wesentlicher Vorteil der erfindungsgemässen Überlastschutzeinrichtung besteht darin, dass sie durch Ergänzung mit verhältnismässig wenigen Schaltungselementen ausgehend von einer Überlastschutzanordnung mit teilweiser Gedächtnisfunktion zu einer Überlastschutzanordnung mit gewissermassen voller Gedächtnisfunktion ertüchtigt ist. Die erfindungsgemässe Schutzanordnung ist daher nach wie vor in ihrem Schaltungsaufbau verhältnismässig einfach. Ausserdem bietet sie den Vorteil einer definierten Ansprechschwelle und berücksichtigt trotzdem die Vorbelastung der zu überwachenden elektrischen Maschine.

Bei der erfindungsgemässen Schutzanordnung hat es sich als vorteilhaft erwiesen, wenn den Kondensatoren der RC-Ladeglieder jeweils ein elektronischer Schalter parallelgeschaltet ist und wenn der Grenzwertgeber aus einer Schwellwerteinrichtung und einem nachgeordneten Invertierer besteht; der Steuereingang des elektronischen Schalters des einen Messteils ist mit dem Ausgang des Invertierers und der Steuereingang des elektronischen Schalters des weiteren Messteils ist mit dem Ausgang der Schwellwerteinrichtung verbunden. Die Schalter der beiden Messteile sind somit an antivalente Ausgänge des Grenzwertgebers angeschlossen, so dass erreicht werden kann, dass der Schalter des einen Messteils erst nach Überschreiten des Schwellwertes geöffnet und der Schalter des weiteren Messteils bis zum Erreichen des Schwellwertes geöffnet ist. Dadurch lässt sich mit einfachen Mitteln sicherstellen, dass bei vom Strom der elektrischen Maschine abhängigen Messgrössen mit Werten unterhalb des Schwellwertes des Grenzwertgebers mittels des weiteren Messteils in dem einen Messteil nur eine Spannung gespeichert wird, die der Vorbelastung entspricht, und nach Überschreiten des Schwellwertes der weitere Messteil unwirksam wird und somit unter Berücksichtigung der Vorbelastung von dem einen Messteil die bei Überschreiten des Schwellwertes sich ergebenden Überlastungen berücksichtigt werden.

Zur Erzielung eines möglichst einfachen Schaltungsaufbaus ist bei der erfindungsgemässen Überlastschutzanordnung vorteilhafterweise der Kondensator des weiteren RC-Ladegliedes über eine Reihenschaltung aus einem Widerstand und einer Diode mit dem Kondensator des einen RC-Ladegliedes verbunden.

Ferner hat es sich als vorteilhaft erwiesen, zu dem Kondensator des weiteren RC-Ladegliedes eine Zenerdiode parallelzuschalten, um zu gewährleisten, dass die Spannung am Kondensator des weiteren RC-Ladegliedes infolge der Vorbelastung stets unterhalb eines vorgegebenen Wertes bleibt; dadurch lassen sich Überfunktionen der erfindungsgemässen Schutzanordnung vermeiden. Es ist aber auch möglich, unter Verzicht auf eine derartige Zenerdiode durch geeignete Dimensionierung des weiteren RC-Ladegliedes diese Forderung einzuhalten.

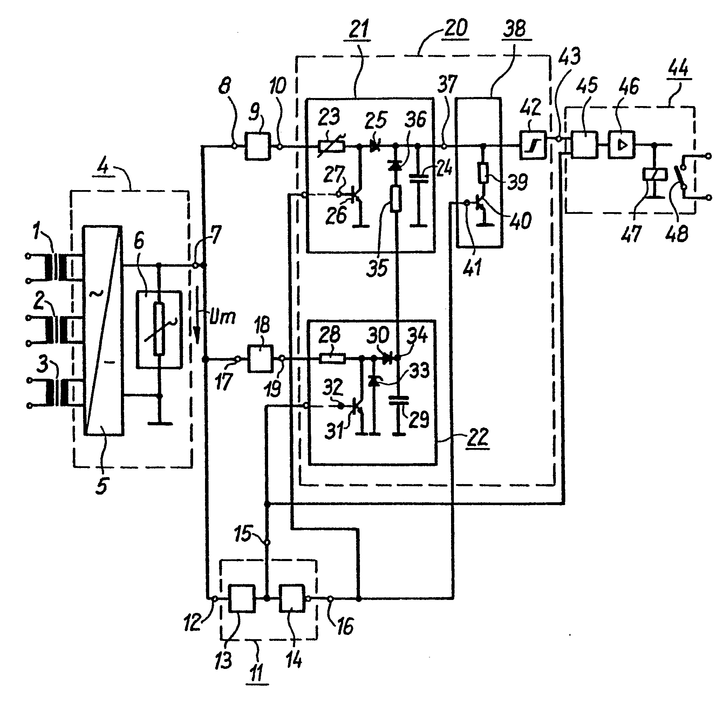

Zur Erläuterung der Erfindung ist in der Figur ein Ausführungsbeispiel der erfindungsgemässen Überlastschutzanordnung dargestellt.

Bei dem wiedergegebenen Ausführungsbeispiel ist die Überlastschutzanordnung mittels Stromwandler 1, 2 und 3 mit Sekundärströmen beaufschlagt, die den Phasenströmen durch die zu überwachende, nicht dargestellte elektrische Maschine entsprechen. In einer an die Stromwandler 1 bis 3 angeschlossenen Schaltungsanordnung 4 zur Gewinnung einer vom Strom der elektrischen Maschine abhängigen Messgrösse wird mittels einer Gleichrichteranordnung 5 und eines Shunts 6 eine vom Strom der elektrischen Maschine abhängige Messgrösse Um gebildet. Diese Messgrösse Um steht am Ausgang 7 der Schaltungsanordnung 4.

An dem Ausgang 7 der Schaltungsanordnung 4 ist mit seinem Eingang 8 ein nichtlineares Netzwerk 9 angeschlossen. Dieses nichtlineare Netzwerk 9 erzeugt an seinem Ausgang 10 eine Messgrösse, die dem Quadrat des Stromes entspricht; bei dem nichtlinearen Netzwerk 9 handelt es sich demzufolge um ein Quadrierglied.

Ebenfalls an dem Ausgang 7 der Schaltungsanordnung 4 ist ein Grenzwertgeber 11 mit seinem Eingang 12 angeschlossen. Der Grenzwertgeber 11 enthält eine Kippstufe 13, der ein Invertierer 14 nachgeordnet ist. Ausgänge 15 und 16 des Grenzwertgebers 11 sind daher zueinander antivalent.

An dem Ausgang 7 der Schaltungsanordnung 4 ist mit ihrem Eingang 17 ein weiteres nichtlineares Netzwerk 18 angeschlossen, das an seinem Ausgang 19 eine ebenfalls dem Quadrat des Stromes der zu überwachenden elektrischen Maschine proportionale Messgrösse erzeugt.

Den nichtlinearen Netzwerken 9 und 18 ist eine Messeinrichtung 20 nachgeordnet, die einen Messteil 21 und einen weiteren Messteil 22 enthält. Der eine Messteil 21 weist ein RC-Ladeglied auf, das aus einem Widerstand 23 und einem Kondensator 24 besteht. Zwischen dem Widerstand 23 und dem Kondensator 24 liegt eine Diode 25. Parallel zum Kondensator 24 ist ein elektronischer Schalter 26 angeordnet, dessen Steuereingang 27 mit dem Ausgang 16 des Grenzwertgebers 11 verbunden ist.

Der weitere Messteil 22 enthält ein weiteres RC-Ladeglied, bestehend aus einem Widerstand 28 und einem Kondensator 29. Zwischen dem Widerstand 28 und dem Kondensator 29 ist wiederum eine Diode 30 geschaltet. Parallel zum Kondensator 29 liegt ein weiterer elektronischer Schalter 31, der mit seinem Steuereingang 32 an dem Ausgang 15 des Grenzwertgebers 11 angeschlossen ist.

Parallel zum Kondensator 29 liegt im dargestellten Ausführungsbeispiel eine Zenerdiode 33, durch die dafür gesorgt ist, dass die Spannung am Kondensator 29 stets unterhalb einer vorgegebenen Schwelle bleibt.

Das nicht an Masse liegende Ende 34 des Kondensators 29 ist über eine Reihenschaltung aus einem Widerstand 35 und einer Diode 36 mit dem nicht an Masse liegenden Anschluss des Kondensators 24 verbunden. An dem Ausgang 37 des einen Messteils 21 ist ein Schaltungsteil 38 angeschlossen, der einen Widerstand 39 und einen zusätzlichen elektronischen Schalter 40 enthält. Der Steuereingang 41 dieses elektronischen Schalters ist an den Ausgang 16 des Grenzwertgebers 11 angeschlossen. Mit dem Schaltungsteil 38 wird eine Entladung des Kondensators 24 des einen Messteils 21 in einer Weise zugelassen, die der Abkühlung der zu überwachenden Maschine entspricht.

Dem Schaltungsteil 38 ist eine weitere Kippstufe 42 nachgeordnet, deren Ausgang 43 den Ausgang der Messeinrichtung 20 bildet.

An den Ausgang 43 der Messeinrichtung 20 und den Ausgang 15 des Grenzwertgebers 11 ist eine Auswerteanordnung 44 angeschlossen, die eingangsseitig ein UND-Glied 45 enthält. Diesem UND-Glied ist ein Verstärker 46 nachgeordnet, an dessen Ausgang ein Auslöserelais 47 liegt. Mittels dessen Kontaktes 48 wird ein Signal erzeugt, das auf einen unzulässig hohen Temperaturanstieg in der zu überwachenden Maschine hinweist.

Die dargestellte Überlastschutzanordnung arbeitet in folgender Weise:

- Mittels der Stromwandler 1 bis 3 wird in der Schaltungsanordnung 4 die Messgrösse Um erzeugt, die vom Strom der elektrischen Maschine, bzw. von den einzelnen Phasenströmen der elektrischen Maschine abhängig ist. Diese Messgrösse Um liegt eingangsseitig an den nichtlinearen Netzwerken 9 und 18 und wird in ihnen quadriert. Ausserdem liegt die Messgrösse Um am Eingang 12 der Kippstufe 13. Liegt der Wert der Messgrösse Um unterhalb eines Wertes, der beispielsweise kleiner als $1{,}1 \cdot J_N$ ist, dann wird mit dem Signal am Ausgang 15 des Grenzwertgebers 11 der elektronische Schalter 31 des weiteren Messteils 22 geöffnet gehalten und dadurch eine Aufladung des Kondensators 29 des RC-Ladegliedes des weiteren Messteils 22 ermöglicht. Von dem invertierten Signal am Ausgang 16 des Grenzwertgebers 11 wird dagegen der elektronische Schalter 26 des einen Messteiles 21 geschlossen und damit das dem Kondensator 24 zugewandte Ende des Widerstandes 23 an Masse gelegt, so dass der Kondensator 24 nicht geladen werden kann. In diesem Zustand der Schutzanordnung kann also nur eine Aufladung des Kondensators 29 des weiteren Messteils 22 erfolgen. Die an dem Kondensator 29 erzeugte Spannung stellt somit ein Mass für die Vorbelastung der zu überwachenden elektrischen Maschine dar. Die Spannung am Kondensator 29 wird über den Widerstand 35 und die Diode 36 auf den Kondensator 24 übertragen, so dass auch in dem einen Messteil 21 ein der Vorbelastung entsprechender Messwert gespeichert ist. Über das Signal am Ausgang 16 des Grenzwertgebers 11 wird ausserdem der elektronische Schalter 40 des Schaltungsteiles 38 geschlossen gehalten, so dass über den Widerstand 39 eine Entladung des Kondensators 24 in einem Umfange erfolgen kann, der der Abkühlung der zu überwachenden Maschine entspricht.

Überschreitet die Messgrösse Um einen Wert, der dem $1,1 \cdot J_N$-Wert entspricht, dann tritt am Ausgang der Kippstufe 13 und damit auch an den Ausgängen 15 und 16 des Grenzwertgebers 11 eine Potentialänderung ein. Es wird nun der elektronische Schalter 26 des einen Messteils 21 geöffnet und damit die Verbindung des Widerstandes 23 mit Masse aufgehoben und ausserdem der elektronische Schalter 31 des weiteren Messteils 22 geschlossen. In den Kondensator 29 des weiteren Messteils 22 können nunmehr Spannungsänderungen nicht mehr gespeichert werden; dies ist erwünscht, weil mit dem Ansprechen der Kippstufe 13 die Zeit der Vorbelastung der zu schützenden elektrischen Maschine beendet ist. Nunmehr wird nur noch über das nichtlineare Netzwerk 9 der Kondensator 24 des RC-Ladegliedes des einen Messteils 21 weiter aufgeladen. Überschreitet die Spannung am Kondensator 24 einen vorgegebenen, festen Grenzwert, dann spricht die weitere Kippstufe 42 an und erzeugt an ihrem Ausgang 43 eine entsprechende Potentialänderung. Diese Potentialänderung bewirkt mit der Potentialänderung am Ausgang 15 des Grenzwertgebers 11, dass das UND-Glied 45 nunmehr ein Ausgangssignal abgibt, das nach Verstärkung mittels des Verstärkers 46 das nachgeordnete Relais 47 zum Ansprechen bringt. Durch Betätigung des Kontaktes 48 wird signalisiert, dass die Temperatur der zu überwachenden elektrischen Maschine einen unzulässig hohen Wert erreicht hat. Durch Betätigung des Kontaktes 48 werden auch Schaltungsmassnahmen zur Abschaltung der zu überwachenden elektrischen Maschine eingeleitet.

Mit der Erfindung ist eine Überlastschutzanordnung für elektrische Maschinen vorgeschlagen, die sich durch einen einfachen Schaltungsaufbau, eine definierte Ansprechschwelle und die Möglichkeit der zumindest näherungsweise Erfassung der Vorbelastung auszeichnet.

**Patentansprüche**

1. Überlastschutzanordnung für eine elektrische Maschine mit einer Schaltungsanordnung (4) zur Gewinnung einer vom Strom der elektrischen Maschine abhängigen Messgrösse (Um), mit einem der Schaltungsanordnung (4) nachgeordneten nichtlinearen Netzwerk (9) und einem an die Schaltungsanordnung (4) angeschlossenen Grenzwertgeber (11), mit einer Messeinrichtung (20) mit einem ein RC-Ladeglied (23, 24) enthaltenden Messteil (21), der dem nichtlinearen Netzwerk (9) und dem Grenzwertgeber (11) nachgeordnet ist, und mit einer Auswerteanordnung (44), die an Ausgänge der Messeinrichtung (20) und des Grenzwertgebers (11) angeschlossen ist, dadurch gekennzeichnet, dass an die Schaltungsanordnung (4) ein weiteres nichtlineares Netzwerk (18) angeschlossen ist, dass die Messeinrichtung (20) einen weiteren Messteil (22) mit einem weiteren RC-Ladeglied (28, 29) enthält, und dass der weitere Messteil (22) eingangsseitig mit dem weiteren nichtlinearen Netzwerk (18) und dem Grenzwertgeber (11) und ausgangsseitig mit dem einen RC-Ladeglied (23, 24) derart verbunden ist, dass die Spannung am Kondensator (29) des weiteren RC-Ladegliedes (28, 29) auf den Kondensator (24) des einen RC-Ladegliedes (23, 24) übertragen wird.

2. Überlastschutzanordnung nach Anspruch 1, dadurch gekennzeichnet, dass den Kondensatoren (24, 29) der RC-Ladeglieder (23, 24; 28, 29) jeweils ein elektronischer Schalter (26; 31) parallelgeschaltet ist, dass der Grenzwertgeber (11) aus einer Schwellwerteinrichtung (13) und einem nachgeordneten Invertierer (14) besteht, und dass der Steuereingang (27) des elektronischen Schalters (26) des einen Messteils (21) mit dem Ausgang (16) des Invertierers (14) und der Steuereingang (32) des elektronischen Schalters (31) des weiteren Messteils (22) mit dem Ausgang (15) der Schwellwerteinrichtung (13) verbunden ist.

3. Überlastschutzanordnung nach einem der beiden Ansprüche 1 oder 2, dadurch gekennzeichnet, dass der Kondensator (29) des weiteren RC-Ladegliedes (28, 29) über eine Reihenschaltung aus einem Widerstand (35) und einer Diode (36) mit dem Kondensator (24) des einen RC-Ladegliedes (23, 24) verbunden ist.

4. Überlastschutzanordnung nach einem der vorangehenden Ansprüche, dadurch gekennzeichnet, dass zu dem Kondensator (29) des weiteren RC-Ladegliedes (28, 29) eine Zenerdiode (33) parallelliegt.

**Claims**

1. An overload protection arrangement for an electric machine comprising a monitoring circuit (4) for the production of a measured variable (Um) dependent upon the current of the electric machine, comprising a non-linear network (9) connected following the monitoring circuit (4) and a limit value generator (11) connected to the monitoring circuit (4), a measuring device (20) possessing a measuring component (21) which contains an RC-charge element (23, 24) connected following the non-linear network (9) and the limit value generator (11), and an analysing device (44) connected to outputs of the measuring device (20) and the limit value generator (11), characterised in that a further non-linear network (18) is connected to the monitoring circuit (4), the measuring device (20) comprises a further measuring component (22) having a further RC-charge element (28, 29), and the further measuring component (22) has its input connected to the further non-linear network (18) and its output connected to the one RC-charge element (23, 24) in such manner that the voltage at the capacitor (29) of the further RC-charge element (28, 29) is transferred to the capacitor (24) of the one RC-charge element (23, 24).

2. An overload protection arrangement as claimed in claim 1, characterised in that an electronic switch (26, 31) is connected in parallel to each of the capacitors (24, 29) of the RC-charge elements (23, 24; 28, 29), the limit value generator (11) consists of a threshold device (13) and a following inverter (14), the control input (27) of the electronic switch (26) of the one measuring component (21) is connected to the output (16) of the inverter (14), and the control input (32) of the electronic switch (31) of the further measuring component (22) is connected to the output (15) of the threshold value device (13).

3. An overload protection arrangement as claimed in claim 1 or 2, characterised in that the capacitor (29) of the further RC-charge element (28, 29) is connected to the capacitor (24) of the one RC-charge element (23, 24) by means of a series connection of a resistor (35) and a diode (36).

4. An overload protection arrangement as claimed in one of the preceding claims, characterised in that the Zener diode (33) is arranged parallel to the capacitor (29) of the further RC-charge element (28, 29).

## Revendications

1. Dispositif de protection contre une surcharge pour une machine électrique avec un montage (4) pour l'obtention d'une grandeur de mesure (Um) qui dépend du courant de la machine électrique, avec un réseau non linéaire (9) monté en aval du montage (4) et un générateur de valeur limite (11) relié au montage (4), avec un dispositif de mesure (20) avec élément de mesure (21) contenant un circuit de charge RC (23, 24) et monté en aval du réseau non linéaire (9) et du générateur de valeur limite (11), et avec un dispositif d'évaluation (44) qui est relié aux sorties du dispositif de mesure (20) et du générateur de valeur limite (11), caractérisé par le fait qu'au montage (4) est relié un second réseau non linéaire (18), que le dispositif de mesure (20) comporte un second élément de mesure (22) avec un second circuit de charge RC (28, 29), et que le second élément de mesure (22) est relié de telle façon, du côté entrée avec le second réseau non linéaire (18) et avec le générateur de valeur limite (11), et, côté sortie avec le premier circuit de charge RC (23, 24), que la tension aux bornes du condensateur du second circuit de charge (28, 29) est transmise au condensateur (24) du premier circuit de charge RC (23, 24).

2. Dispositif de protection contre une surcharge selon la revendication 1, caractérisé par le fait que, à la suite de chacun des condensateurs (24, 29) des circuits RC (23, 24; 28, 29), est monté en parallèle un commutateur électronique (26, 31), que le générateur de valeur limite (11) est constitué par un dispositif à valeur de seuil (13) et par un inverseur aval (14), et que l'entrée de commande (27) du commutateur électronique (26) du premier élément de mesure (21) est reliée à la sortie (16) de l'inverseur (14) et l'entrée de commande (32) du commutateur électronique (31) du second élément de mesure est reliée à la sortie (15) du dispositif à valeur de seuil (13).

3. Dispositif de protection contre une surcharge selon l'une des revendications 1 ou 2, caractérisé par le fait que le condensateur (29) du second circuit RC (28, 29) est relié, par l'intermédiaire d'un circuit série formé par une résistance (35) et par une diode (36), au condensateur (24) du premier circuit RC (23, 24).

4. Dispositif de protection contre une surcharge selon l'une des revendications précédentes, caractérisé par le fait que, en parallèle sur le condensateur (29) du second circuit RC (28, 29), est montée une diode Zener (33).